(19) **Europäisches Patentamt**
**European Patent Office**
**Office européen des brevets**

(11)  **EP 1 940 041 B1**

(12)  **EUROPEAN PATENT SPECIFICATION**

(45) Date of publication and mention
of the grant of the patent:
**13.04.2016  Bulletin 2016/15**

(51) Int Cl.:
*H04B 1/707* (2006.01)    *H04B 1/7105* (2011.01)
*H04L 25/02* (2006.01)

(21) Application number: **05785082.8**

(86) International application number:
**PCT/CN2005/001478**

(22) Date of filing: **15.09.2005**

(87) International publication number:
**WO 2007/030972 (22.03.2007 Gazette 2007/12)**

(54) **BASEBAND PROCESSING METHOD FOR IMPROVING SIGNAL-TO-NOISE RATIO BASED ON MULTIPLE SAMPLING**

BASISBAND-VERARBEITUNGSVERFAHREN ZUM VERBESSERN DES RAUSCHABSTANDS AUF DER BASIS VON MEHRFACH-SAMPLING

PROCEDE DE TRAITEMENT DE BANDE DE BASE POUR AMELIORER UN RAPPORT SIGNAL SUR BRUIT SELON UN ECHANTILLONNAGE MULTIPLE

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**02.07.2008  Bulletin 2008/27**

(73) Proprietor: **ZTE Corporation**
**Shenzhen City, Guangdong Province 518057 (CN)**

(72) Inventors:
• **JIANG, Hai**
**Shenzen City,**
**Guangdong Province 518057 (CN)**

• **LI, Ping**
**Shenzen City,**
**Guangdong Province 518057 (CN)**
• **GENG, Peng**
**Shenzen City,**
**Guangdong Province 518057 (CN)**

(74) Representative: **Schröer, Gernot H. et al**
**Meissner, Bolte & Partner GbR**
**Bankgasse 3**
**90402 Nürnberg (DE)**

(56) References cited:
EP-A2- 0 767 543      WO-A1-2004/028005
CN-A- 1 604 512       DE-A1- 4 329 317
DE-C1- 19 920 819     US-A1- 2004 202 233

## Description

### Technical Field

The present invention refers to a baseband processing method for improving signal-to-noise ration (SNR) based on multiple sampling in a mobile communication system. The related art has been disclosed in DE 4329317 A1 of SIEMENS AG [DE], 2 March, 1995 and in EP0767543A2 of SIEMENS AG [DE], 9 April, 1997.

### Technology Background

In a digital communication system, it is common to use shaping filter at the receiving/sending ends in order to limit communication bandwidth. In the case of using a shaping filter, the sampling time points at the receiving end will affect the SNR of the sampled signals, and the SNR will be the maximum by only sampling at certain time points. However, because of the randomness of wireless channels, the user multi-path delay changes randomly, which results in a random change of SNR of the sampled signals, as well as a certain loss of the system performance.

A method of increasing sampling speed is usually employed in order to improve the SNR of sampling points in random wireless channels. Chinese patent number 1317914 and titled as "A signal processing method for terminal equipment side in CDMA communication system" proposes a signal processing method of multiple sampling by using joint detection which is applied in CDMA system. The principle for it is that the receiving end performs multi-path sampling within one chip and channel estimation is performed for each path respectively and then all paths participate in joint detection. The advantage is that under the condition of random multi-path delay, the average sampled signal SNR obtained by multi-path sampling is higher than the SNR of single path sampling, thus the system performance is improved.

However, because of the usage of a shaping filter at the receiving end, the multi-path noises of multi-path sampled signals within one chip are correlated, and the diversity gain brought on by the combination of multi-path signals is not the gain of MRC (maximum ration combining). In fact, instead of the sum of the SNR of multi-path signals (MRC), the SNR after the combination of multi-path signals is between the maximum SNR and the minimum SNR for the paths. In other words, the SNR after the combination of multi-path signals is less than the maximum SNR that could be obtained. Stimulation also proves this, when the wireless channel is configured as synchronous and thus it is ensured that the sampling point of each multi-path of each user has the maximum SNR, the performance of multiple sampling based on the above process is worse than that of single sampling.

### Summary of the Invention

The technical problem that needs to be solved in present invention is to propose a new baseband processing solution for improving signal-to-noise ratio (SNR) based on multiple sampling in order to resist the deteriorated SNR brought by the random wireless channel and to further improve SNR. In order to solve the above technical problem, the idea of present invention is as follows: performing multi-path sampling in each individual chip of received signals; performing channel estimation for each path signal respectively; comparing the multi-path channel estimation of each user with each other and taking the channel estimation tap that has relatively greater power and less noise correlation to participate in the matched filtering in the joint detection.

In order to realize the idea of present invention, said invention provides a baseband processing method according to claim 1 for improving signal-to-noise ratio (SNR) based on multiple sampling, which comprises the following steps:

Sampling is performed for N times in each chip for the received signals to obtain sampled data of N paths:

$$e_m^s, s = 1, ..., N;$$

A channel estimation $\hat{h}^s, s=1,...,N$ is performed for the received sampled signals of each path respectively;

(c) the channel estimation $\hat{h}^s$ of each path is compared with each other to determine the channel estimation $\tilde{h}_{MF}^s$ that has relatively greater power as well as less noise correlation, thus constituting a matched filtering matrix $A_{MF}^s$;

(d) a joint detection is performed for the signals of users by using system matrix $A^s$ and matched filtering matrix $A_{MF}^s$, thus obtaining the symbol $\hat{d}$ of each user.

Furthermore, in step (b), said channel estimation $\hat{h}^s$ is obtained by using the eqation: $\tilde{h}^s = M^{-1} e_m^s$, in which $e_m^s$ is the training sequence signals of the $s^{th}$ sampling, M is the launched training sequence matrix, $\hat{h}^s$ is the channel impulse response of all the users in the local cell of the $s^{th}$ path sampling.

Furthermore, the channel estimation $\tilde{h}_{MF}^{s}$ in step (c) can be obtained by employing the following steps:

(c1) performing post processing for the channel estimation $\hat{h}^s$ of each path and obtaining the tap position of user signal path, as well as the channel estimation $\hat{h}^s_p(i), i=1,..., N_m$, $s=1,...,N$ after the post processing, in which $N_m$ is the length of the channel estimation $\hat{h}^s$ of each path;

(c2) combining the channel estimation $\hat{h}^s_p(i)$ into a total channel estimation $\hat{h}^{total}(l)$, $\hat{h}^{total}(l)|_{l-((i-l))N+s)}=\hat{h}^s_p(i), i=1, N_m, s=1,...,N$, according to the time order;

(c3) performing a descending sorting on $|\hat{h}^{total}(l)|$ and obtaining the channel estimation sequence $\hat{h}^{total}(k_l), l=1,...,N\cdot N_m$ after the sorting and then performing the following calculations in an order from $k_1$ to $k_{N\cdot N_M}$: if $|\hat{h}^{total}(k_l)|$ is greater than zero, then the tap of this channel impulse response in channel estimation sequence $\hat{h}^{total}(l)$ before sorting is retained and other values of this tap within the chip just on the left and the chip just on the right in $\hat{h}^{total}(l)$ are set as zeros;

(c4) reducing the total channel estimation sequence $\hat{h}^{total}(l)$ which is obtained after the processing of step (c3) to the channel estimation $\tilde{h}_{MF}^{s}$ of N-path sampling.

Furthermore, in step (c), channel estimation $\tilde{h}_{MF}^{s}$ can also be realized by employing the following steps:

(c11) performing post processing for the channel estimation of each path and obtaining the tap position of user signal path, as well as the channel estimation $\hat{h}^s_p(i)$, $i=1,...,N_m, s=1,...,N$ after the post processing, in which $N_m$ is the length of the channel estimation $\hat{h}^s$ of each path;

(c12) comparing the modulus of the channel estimation of N-path sampling within one chip time length; selecting the maximum value and setting the others as zeros to obtain the channel estimation $\tilde{h}_{MF}^{s}$ of N-path sampling.

It can be seen from above that the method of the present invention participates in the matched filtering interference elimination of the joint detection by selecting the channel estimation tap that has relatively greater power as well as uncorrected noise in multiple sampling, therefore improving the SNR and the system performance. The present invention is applicable to any mobile digital communication system, especially to the system that employs joint detection solution. It can be used in either base stations or terminals, and can be used in either the single antenna environments or multiple-antenna environments.

**Brief Description of Drawings**

Figure 1 is a diagram of the processing method for the first embodiment of the present invention;

Figure 2 is a diagram of the processing method for the second embodiment of present invention.

**Best Embodiments for Carrying out the Present Invention**

The two embodiments of the present invention will be further described in detail with reference to the attached figures.

The first example:

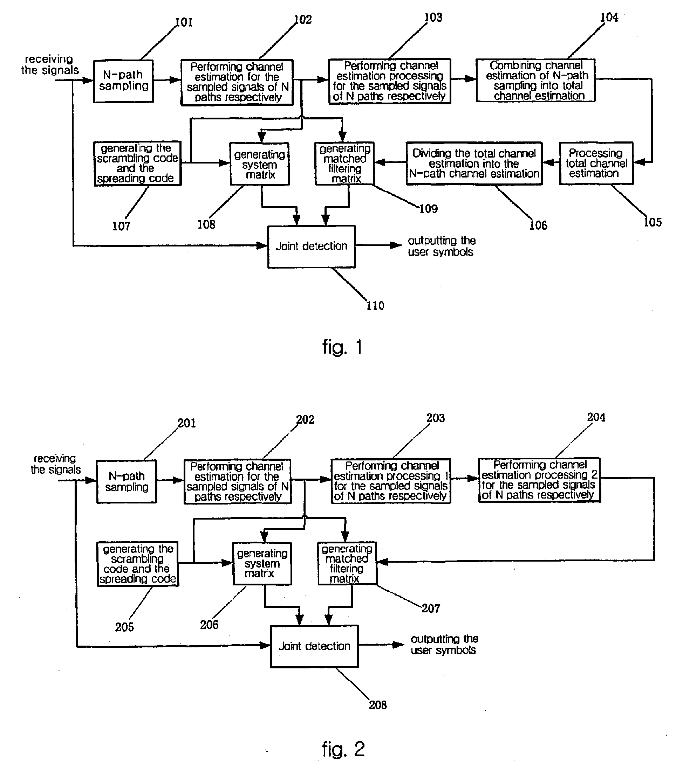

As shown in the figure 1, a baseband processing method for improving signal-to-noise ratio (SNR) based on multiple sampling employs the following steps:

Step 101: performing multi-path sampling in each chip for received signals;
It is assumed that N times of samplings with the same time interval are performed in each chip of received signals, and the training sequence signal of the $s^{th}$ sampling is represented as $e_m^s$, $s=1,...,N$.

Step 102: performing channel estimation for the sampled signals of N paths respectively;

The received training sequence is obtained by multi-path superposition of the multi-user training sequence signals and the superposition with the noise interference afterwards, which can be represented as:

$$e_m^s = Mh^s + n_m^s, s = 1, ..., N \qquad (1)$$

wherein M is the launched training sequence matrix, $\hat{h}^s$ is the channel impulse response of all the users in the local cell of the $s^{th}$ path sampling, $n_m^s$ is the noise that is superimposed on the training sequence of the $s^{th}$ path sampling, therefore the channel estimation $\hat{h}^s$ of each path sampling can be represented as follows:

$$\bar{h}^s = M^{-1} e_m^s, s = 1, ..., N \qquad (2)$$

wherein the dimension of the channel impulse response $\hat{h}^s$ of the $s^{th}$ path sampling is assumed to be $N_m \times 1$.

Step 103: performing post processing for the channel estimation $\hat{h}^s$ of each path and obtaining the tap position of user signal path;

In other words, the power of each tap in $\hat{h}^s$ is compared with a threshold; the tap that is lower than the threshold is considered as the noise, and its value is set as zero; the tap that is higher than the threshold is considered as the signal, and its value keeps unchanged. The channel estimation is assumed to be $\hat{h}^s_p(i), i=1,...,N_m, s=1,...,N$ after the post processing.

Step 104: Sorting the channel estimation $\hat{h}_p^s$, $s=1,...,N$ of the N-path sampling, in time order and combining them into a total channel estimation $\hat{h}^{total}(l)$, $l=1,..., N \cdot N_m$, then:

$$\hat{h}^{total}(l) \big|_{l=((i-1)N+s)} = \hat{h}_p^s(i), i = 1, ..., N_m, s = 1, ..., N \qquad (3)$$

For example, assuming $N_m$ is equal to 3, N is equal to 2, the channel estimation sequence $\hat{h}^1$ is $\hat{h}^1(1)$, $\hat{h}^1(2)$, $\hat{h}^1(3)$, the channel estimation sequence $\hat{h}^2$ is $\hat{h}^2(1)$, $\hat{h}^2(2)$, $\hat{h}^2(3)$, then the sequence after combination is $\hat{h}^{total}(l)=\hat{h}^1(1)$, $\hat{h}^2(1)$, $\hat{h}^1(2)$, $\hat{h}^2(2)$, $\hat{h}^1(3)$, $\hat{h}^2(3)$.

Step 105: processing the total channel estimation $\hat{h}^{total}$ and selecting the tap that has relatively greater power and uncorrelated noises, setting other taps as zeros;

The sequence $\hat{h}^{total}(l)$, $l=1,...,N \cdot N_m$ is xesotted in a descending order based on the value of $|\hat{h}^{total}(k_l)|$, and the sequence $\hat{h}^{total}(k_l)$, $l=1,...,N \cdot N_m$, is obtained, i.e., $|\hat{h}^{total}(k_1)| \geq |\hat{h}^{total}(k_2)| \geq \cdots \geq |\hat{h}^{total}(k_{N-N_m})|$.

For $k_1$, if $|\hat{h}^{total}(k_1)| > 0$, then:

$$\hat{h}^{total}(l) = 0, l = k_1 - (N-1), k_1 - (N-2), ..., k_1 - 1, k_1 + 1, k_1 + 2, k_1 + (N-1),$$

$\hat{h}^{total}(l)$ is the total channel estimation sequence before sorting. The operation on $k_1$ is repeated for $k_2$, $k_3$,..., $k_{N-N_m}$, i.e., the tap that has relatively greater power and uncorrected noises can be selected.

The process can be described as follows by using the algorithm language.

```
for l=1:N·N_m
   if |ĥ^total(k_l)|> 0
```

$$\hat{h}^{total}(l) = 0, l = k_1 - (N-1), k_1 - (N-2), ..., k_1 - 1, k_1 + 1, k_1 + 2, k_1 + (N-1) \qquad (4)$$

```
end if
end for
```

This step assumes that the noises of multi-path sampling within one chip are correlated, as a result, while retaining the channel impulse response tap that has relatively greater power, other values of this tap within the chip just on the left and the chip just on the right are set as zeros, and these taps do not participate in the matched filtering due to the reason that the combination of the noise-related sampled signals of each path will not bring about the gain.

Step 106: reducing $\hat{h}^{total}(l)$ which is obtained after the process in step 105 into the channel estimation $\widehat{h}_{MF}^{s}$ of N-path sampling, in which,

$$\widehat{h}_{MF}^{s}(i) = \overline{h}^{total}((i-1)N+s), i=1,...,N_m, s=1,...,N \qquad (5)$$

Step 107: generating the scrambling code and spreading code of the local cell.

Step 108: using each user's scrambling code, spreading code and channel estimation $\hat{h}^s$ to constitute a system matrix $A^s$.

Said step 107 and 108 could be executed in parallel with steps 103 to 106 after step 102 is completed, and they have no order relationships with the execution of steps 103 to 106.

Step 109: using each user's scrambling code, spreading code and the channel estimation $\widehat{h}_{MF}^{s}$ of the matched filtering in joint detection to constitute the matched filtering matrix $A_{MF}^{s}$.

Step 110: performing joint detection for the user signals to obtain each user symbol $\hat{h}$;

The multi-path sampled signal $e_d^s$ of the received data part could be represented as the following:

$$e_d^s = A^s d + n_d^s, s=1,...,N \qquad (6)$$

Wherein $A^s$ is the system matrix of the $s^{th}$ path sampling, which is composed of each user's scrambling code, spreading code and channel estimation $\hat{h}^s$. The matched filtering system matrix $A_{MF}^{s}$ of the $s^{th}$ path sampling is composed of each user's scrambling code, spreading code and the channel estimation $\widehat{h}_{MF}^{s}$ that participates in matched filtering. The estimation for user symbol $d$ in (6) is as follows:

Zero Forcing Block Linear Equalizer:

$$\widetilde{d} = (\sum_{s=1}^{N} (A_{MF}^{s})^{H} A^{s})^{-1} \sum_{s=1}^{N} (A_{MF}^{s})^{H} e_d^s \qquad (7)$$

Minimum Mean Square Error Block Linear Equalizer:

$$\widetilde{d} = (\sum_{s=1}^{N} (A_{MF}^{s})^{H} A^{s} + \sigma_n^2 I)^{-1} \sum_{s=1}^{N} (A_{MF}^{s})^{H} e_d^s \qquad (8)$$

wherein, $\sigma_n^2$ is the noise power.

The key point in the method of present embodiment is to pick out the multi-path that has relatively greater power and uncorrelated noise from the multi-path sampled signals to participate in the matched filtering in joint detection, thus obtaining diversity gain.

The second example:

The method in the first embodiment needs to perform sotting for channel estimation of each path, which is complicated. The present embodiment simplifies it with the cost of a certain loss in performance, as shown in figure 2, the detailed description is as follows:

Step 201: performing chip multi-path sampling for the received signals;

It is assumed to perform N times of samplings with the same time interval in each chip for the received signals; the training sequence signal of the $s^{th}$ sampling is represented as $e_m^s$, s=1,...,N.

Step 202: performing channel estimation for the sampled signals of N paths respectively;
The received training sequence is obtained by multi-path superposition of the multi-user training sequence signals and the superposition with the noise interference afterwards, which could be represented as:

$$e_m^s = Mh^s + n_m^s, s = 1, ..., N \qquad (9)$$

wherein M is the launched training sequence matrix, $\hat{h}^s$ is the channel impulse response of all the users in the local cell of the $s^{th}$ path sampling, $n_m^s$ is the noise that is superimposed on the training sequence of the $s^{th}$ path sampling, therefore the channel estimation $\hat{h}^s$ of each path sampling can be represented as follows:

$$\bar{h}^s = M^{-1}e_m^s, s = 1, ..., N \qquad (10)$$

wherein the dimension of the channel impulse response $\hat{h}^s$ of the $s^{th}$ path sampling is assumed to be $N_m \times 1$.

Step 203: performing post processing for the channel estimation $\hat{h}^s$ of each path and obtaining the tap position of user signal path;
In other words, the power of each tap in $\hat{h}^s$ is compared with a threshold; the tap that is lower than the threshold is considered as the noise, with the set value as zero; the tap that is higher than the threshold is considered as the signal with its value unchanged. The channel estimation is assumed to be $\hat{h}_p^s(i), i=1,...,N_m, s=1,...,N$ after the post processing.

Step 204, comparing the modulus of the channel estimation of each path sampling within a chip time length, picking the maximum value and setting others as zeros;
The process could be described as follows by using the algorithm language:

for $i$=1 : $N_m$

in $|\bar{h}_p^s(i)|$, $s$=1,...,N with N values, selecting the maximum value and setting the sequence number as $s_{max}$, also setting:

$$\hat{\bar{h}}_{MF}^{S_{max}}(i) = \bar{h}^{s_{max}}(i)$$

$$\hat{\bar{h}}_{MF}^s(i) = 0, s = 1, ..., s_{max} - 1, s_{max} + 1, ..., N \qquad (11)$$

end for.

Step 205: Generating the scrambling code and spreading code of the local cell.

Step 206: using each user's scrambling code, spreading code and channel estimation $\hat{h}^s$ to constitute system matrix $A^s$.
Said step 205 and 206 could be executed in parallel with step 203 and step 204 after step 202 is completed, and they have no order relationships with the execution of step 203 and step 204.

Step 207: using each user's scrambling code, spreading code and the channel estimation $\hat{\bar{h}}_{MF}^s$ of the matched filtering in joint detection to constitute the matched filtering matrix $A_{MF}^s$.

Step 208: performing joint detection for the user signals to obtain each user symbol $\hat{d}$;
The multi-path sampled signal $e_d^s$ of the received data part can be represented as follows:

$$e_d^s = A^s d + n_d^s, s = 1,...,N \qquad (12)$$

Wherein $A^s$ is the system matrix of the $s^{th}$ path sampling, which is composed of each user's scrambling code, spreading code and channel estimation $\hat{h}^s$. While at the same time, the matched filtering system matrix $A_{MF}^s$ is constructed, which is composed of each user's scrambling code, spreading code and the channel estimation $\widetilde{h}_{MF}^s$ that participates in matched filtering. The estimation on user symbol d in (12) is as follows:

Zero Forcing Block Linear Equalizer:

$$\widetilde{d} = (\sum_{s=1}^{N} (A_{MF}^s)^H A^s)^{-1} \sum_{s=1}^{N} (A_{MF}^s)^H e_d^s \qquad (13)$$

Minimum Mean Square Error Block Linear Equalizer:

$$\widetilde{d} = (\sum_{s=1}^{N} (A_{MF}^s)^H A^s + \sigma_n^2 I)^{-1} \sum_{s=1}^{N} (A_{MF}^s)^H e_d^s \qquad (14)$$

wherein $\sigma_n^2$ is the noise power.

The key point in the method of the second embodiment is to compare the modulus of the channel estimation of N-path sampling within a chip time length, pick out the maximum value to participate in the matched filtering in joint detection and set other values as zeros without participating in the matched filtering in joint detection. This is simpler than the first solution. However, in the second solution, the noises between the taps that have the maximum channel estimation power in each chip may still be correlated, thus the performance may be lost to a certain degree.

**Industry Applicability**

Said solutions of the present invention improve the SNR and the system performance by selecting the channel estimation tap that has relatively greater power as well as uncorrelated noise in multiple sampling and participating in the matched filtering interference elimination of the joint detection. It can be used in either base stations or terminals, and can be used in the either single antenna environments or multiple-antenna environments.

**Claims**

1. A baseband processing method for improving signal-to-noise ratio (SNR) based on multiple sampling, comprising the following steps:

   (a) N samples are taken within each chip for received signals to obtain sampled data of N paths (101, 201), wherein, the samples taken by a $s^{th}$ sampling within each chip constitute sampled data of a path: $e_m^s$, $s = 1,...,N$;
   (b) performing channel estimation $\hat{h}^s, s=1,...,N$ for received sampled signals of each path respectively (102, 203);
   (c) comparing the channel estimation $\hat{h}^s$ of each path to determine a channel estimation $\widetilde{h}_{MF}^s$ that has relatively greater power as well as less noise correlation (103-106, 203-204); then using each user's scrambling code, spreading code and the channel estimation $\widetilde{h}_{MF}^s$ to constitute a matched filtering matrix $A_{MF}^s$ (109, 207);
   (d) performing a joint detection for users signals by using a system matrix $A^s$ and the matched filtering matrix $A_{MF}^s$, thus obtaining symbol $\hat{d}$ of each user(110, 208); wherein, the system matrix $A^s$ is composed of each user's spreading code, scrambling code and the channel estimation $\hat{h}^s$;

   the method is **characterized in that**,

   the channel estimation $\widetilde{h}_{MF}^s$ in step (c) is obtained by employing the following steps:

(c1) performing post processing for the channel estimation $\hat{h}^s$ of each path and obtaining a tap position of a user signal path, as well as a channel estimation $\hat{h}^s_p(i), i=1,...,N_m, s=1,...,N$ after the post processing, wherein $N_m$ is a length of the channel estimation $\hat{h}^s$ of each path;

wherein, the performing post processing for the channel estimation $\hat{h}^s$ of each path comprises: comparing the power of each tap in $\hat{h}^s$ with a threshold; taking the tap that is lower than the threshold as noise, and setting a value of the tap as zero; taking the tap that is higher than the threshold as the signal, and keeping a value of the tap unchanged;

(c2) combining the channel estimation $\hat{h}^s_p(i)$ in time order into a total channel estimation $\hat{h}(l)$, $\widehat{h}^{total}(l)|_{l=((i-1)N+s)} = \widehat{h}^s_p(i)$, $i=1,...,N_m, s = 1,..., N$, ;

(c3) performing a descending sorting on $|\hat{h}^{total}(l)|$ and obtaining a channel estimation sequence $\hat{h}^{total}(k_l), l=1,...,N \cdot N_m$ after the sorting and then performing following calculations in an order starting from $k_l$ to $k_{N \cdot NM}$: if $|\hat{h}^{total}(k_l)|$ is greater than zero, then an impulse response tap of this channel in channel estimation sequence $\hat{h}^{total}(l)$ before sorting is retained and other values of this tap within a chip just on the left and a chip just on the right in $h(l)$ are set as zeros;

(c4) reducing the total channel estimation sequence $\hat{h}^{total}(l)$ which is obtained after the processing of step (c3) to the channel estimation $\widehat{h}^s_{MF}$ of N-path sampling,

preferably, in step (d), a symbol d of each said user is estimated based on a multi-path sampled signal $e^s_d$ of received data part, the system matrix $A^s$ and the matched filtering matrix $A^s_{MF}$, and an equation is as follows:

$$\widehat{d} = (\sum_{s=1}^{N}(A^s_{MF})^H A^s)^{-1} \sum_{s=1}^{N}(A^s_{MF})^H e^s_d$$

or

$$\widehat{d} = (\sum_{s=1}^{N}(A^s_{MF})^H A^s + \sigma^2_n I)^{-1} \sum_{s=1}^{N}(A^s_{MF})^H e^s_d ,$$

wherein $e^s_d$ is the multi-path sampled signal of the received data part, $e^s_d = A^s d + n^s_d$, $s=1,...,N$, $\sigma^2_n$ is noise power.

2. The baseband processing method for improving signal-to-noise ratio (SNR) based on multiple sampling of claim 1, **characterized in that** in step (b), said channel estimation $\hat{h}^s$ is obtained by using an equation: $\widehat{h}^s = M^{-1} e^s_m$, wherein $e^s_m$ is a training sequence signal of an $s^{th}$ sampling, M is a launched training sequence matrix, $\hat{h}^s$ is channel impulse response of all the users in a local cell of the $s^{th}$ path sampling.

3. The baseband processing method for improving signal-to-noise ratio (SNR) based on multiple sampling of claim 1, wherein in step (c1), the channel estimation $\hat{h}^s_p(i)$ after said post processing is obtained as follows: comparing the power of each tap in $\hat{h}^s$ with a threshold; the tap that is lower than the threshold is considered as noise, and its value is set as zero; the tap that is higher than the threshold is considered as a signal, and its value is retained.

**Patentansprüche**

1. Verfahren der Basisband-Verarbeitung zur Verbesserung des Rauschabstands (SNR) anhand eines Mehrfachabgriffs, welches die folgenden Schritte umfasst:

(a) Abgreifen von N Abtastwerte innerhalb jedes Chips für empfangene Signale, um abgetastete Daten für N Pfade (101, 201) zu erhalten, wobei die durch einen s-ten Abtastvorgang abgegriffenen Abtastwerte innerhalb jedes Chips Abtastdaten für einen Pfad darstellen: $e^s_m$, $s = 1, ...,N$;

(b) Ausführen einer Kanalhochrechnung $\hat{h}^s$, $s = 1, ..., N$ für jeweils empfangene abgetastete Signale für jeden Pfad (102, 203);

(c) Vergleichen der Kanalhochrechnung $\hat{h}^s$ jedes Pfads zur Ermittlung einer Kanalhochrechnung $\hat{h}^s_{MF}$ , die eine relativ größere Stärke sowie eine geringere Rausch-Korrelation (103-106, 203-204) aufweist, und danach Verwenden des Verschlüsselungscodes, des Spreizcodes und der Kanalhochrechnung $\hat{h}^s_{MF}$ jedes Benutzers für den Aufbau einer abgestimmten Filtermatrix $A^s_{MF}$ (109, 207);

(d) Ausführen einer gemeinsamen Erfassung für Benutzersignale unter Verwendung einer Systemmatrix $A^s$ und der abgestimmten Filtermatrix $A^s_{MF}$, und somit Erhalten eines Symbols d für jeden Benutzer (110, 208), wobei die Systemmatrix $A^s$ aus dem Spreizcode, dem Verschlüsselungscode und der Kanalhochrechnung $\hat{h}^s$ jedes Benutzers zusammengesetzt ist, **dadurch gekennzeichnet, dass**

die Kanalhochrechnung $\hat{h}^s_{MF}$ im Schritt (c) unter Anwendung der folgenden Schritte erzielt wird:

(c1) Ausführen einer Nachbearbeitung für die Kanalhochrechnung $\hat{h}^s$ für jeden Pfad und Erhalten einer Abgreifposition für den Pfad eines Benutzersignals, sowie als Kanalhochrechnung $\hat{h}^s_p (i)$, $i=1,...,N_m$, $s=1,...,N$ im Anschluss an die Nachbearbeitung, wobei es sich bei $N_m$ um eine Länge der Kanalhochrechnung $\hat{h}^s$ für jeden Pfad handelt;

wobei die Ausführung der Nachbearbeitung für die Kanalhochrechnung $\hat{h}^s$ für jeden Pfad folgendes umfasst: Vergleichen der Stärke jedes Abgriffs bei $\hat{h}^s$ mit einem Schwellwert; Heranziehen des Abgriffs, der geringer als der Schwellwert ist, als Rauschen, und Einstellen eines Werts des Abgriffs als Null; Heranziehen des Abgriffs, der höher als der Schwellwert ist, als das Signal und Beibehalten eines Werts des Abgriffs in unveränderter Form;

(c2) Kombinieren des Kanalhochrechnung $\hat{h}^s_p (i)$ in der zeitlichen Reihenfolge in eine Gesamt-Kanalhoch-rechnung

$$\hat{h}^{total} (l), \hat{h}^{total} (l) \mid_{l=((i-1)N+s)} = \hat{h}^s_p (i), i = 1, ..., N_m, s = 1, ..., N ;$$

(c3) Ausführen einer absteigenden Sortierung bei $|\hat{h}^{total} (l)|$ und Erhalten einer Abfolge von Kanalhochrechnungen $\hat{h}^{total} (k_1)(l) = 1, ..., N * N_m$ nach der Sortierung und anschließend Ausführen der folgenden Berechnungen in einer Reihenfolge, die bei $k_1$ bis $k_N * N_M$ beginnt: wenn $|\hat{h}^{total} (k_1)|$ größer als Null ist, dann wird ein Impulsantwort-Abgriff für diesen Kanal in der Sequenz der Kanalhochrechnung $\hat{h}^{total} (l)$ vor der Sortierung beibehalten und werden weitere Werte dieses Abgriffs innerhalb eines Chips genau links und eines Chips genau rechts bei $\hat{h}^{total} (l)$ als Nullen gesetzt;

(c4) Vermindern der Abfolge bei der Gesamt-Kanalhochrechnung $\hat{h}^{total} (l)$, die nach Verarbeitung im Schritt (c3) bei der Kanalhochrechnung $\hat{h}^s_{MF}$ nach der N-Pfad-Abtastung erhalten wurde,

und vorzugsweise in einem Schritt (d) ein Symbol d für jeden Benutzer anhand eines über mehrere Pfade abgetasteten Signals $e^s_d$ eines empfangenen Datenteils, der Systemmatrix $A^s$ und der abgestimmten Filter-matrix $A^s_{MF}$ hochrechnet wird, und eine Gleichung dann wie folgt ist:

$$\hat{d} = \left(\sum_{s=1}^{N} (A^2_{MF})^H A^s\right)^{-1} \sum_{s=1}^{N} (A^s_{MF})^H e^s_d$$

oder

$$\hat{d} = \left(\sum_{s=1}^{N} (A^2_{MF})^H A^s + \sigma^2_n I\right)^{-1} \sum_{s=1}^{N} (A^s_{MF})^H e^s_d$$

wobei $e^s_d$ das über mehrere Pfade abgetastete Signal des empfangenen Datenteils darstellt und $e^s_d = A^s d + n^s_d$, $s = 1,..., N$ und $\sigma^2_n$ die Rauschstärke repräsentiert.

2. Verfahren der Basisband-Verarbeitung zur Verbesserung des Rauschabstands (SNR) anhand eines Mehrfachabgriffs nach Anspruch 1, **dadurch gekennzeichnet, dass** im Schritt (b) die Kanalhochrechnung $\hat{h}^s$ durch Anwendung einer Gleichung $\hat{h}^s = M^{-1} e^s_m$ erhalten wird, wobei es sich bei $e^s_m$ um ein Trainier-Sequenzsignal eines s-ten Abgreifvorgangs handelt, M eine gestartete Matrix für eine Trainer-Sequenz ist und $\hat{h}^s$ eine Kanal-Impulsantwort aller Benutzer in einer Ortszelle des s-ten Pfad-Abtastvorgangs darstellt.

**3.** Verfahren der Basisband-Verarbeitung zur Verbesserung des Rauschabstands (SNR) anhand eines Mehrfachabgriffs nach Anspruch 1, bei welchem im Schritt (c1) die Kanalhochrechnung $\hat{h}_p^s(i)$ nach der Nachverarbeitung wie folgt erhalten wird: Vergleichen der Stärke jedes Abgriffs bei $\hat{h}^s$ mit einem Schwellwert, wobei der Abgriff, der geringer ist als der Schwellwert, als Rauschen betrachtet wird und dessen Wert auf null gesetzt wird, und wobei der Abgriff, der höher ist als der Schwellwert, als Signal betrachtet wird und dessen Wert beibehalten wird.

**Revendications**

**1.** Procédé de traitement de bande de base destiné à améliorer le rapport signal sur bruit (SNR) sur la base d'un échantillonnage multiple, comprenant les étapes suivantes:

(a) N échantillons sont pris dans chaque puce pour des signaux reçus afin d'obtenir des données échantillonnées de N voies (101, 201), les échantillons pris par un S$^{ème}$ échantillonnage dans chaque puce constituant des données échantillonnées d'une voie $e_m^s$, s = 1,...,N;

(b) réalisation d'une estimation de canal $\hat{h}^s$,s = 1, ...,N pour des signaux échantillonnés reçus de chaque voie (102, 103), respectivement;

(c) comparaison de l'estimation de canal $\hat{h}^s$ de chaque voie pour déterminer une estimation de canal $\hat{h}_{MF}^s$ qui a une puissance relativement plus grande de même que moins de bruits de corrélation (103 à 106, 203 à 204); et utilisation ensuite de chacun du code de cryptage d'utilisateur, du code d'étalement et de l'estimation de voie $\hat{h}_{MF}^s$ pour constituer une matrice de filtrage appariée $A_{MF}^s$ (109, 207);

(d) effectuer une détection conjointe de signaux d'utilisateurs en utilisant une matrice de système $A^s$ et la matrice de filtrage appariée $A_{MF}^s$, en obtenant ainsi le symbole $\hat{d}$ de chaque utilisateur (110, 208); dans lequel la matrice de système $A^s$ est constituée de chacun du code de cryptage d'utilisateur, du code d'étalement et de l'estimation de voie $\hat{h}_{MF}^s$,

le procédé est **caractérisé en ce que**

l'estimation de canal $\hat{h}_{MF}^s$ à l'étape (c) est obtenue en utilisant les étapes suivantes:

(c1) réalisation d'un post-traitement de l'estimation de canal $\hat{h}^s$ de chaque voie, et obtention d'une position de prise d'une voie de si-gnal d'utilisateur, ainsi qu'une estimation de canal $\hat{h}_p^s(i)$, i = 1,...,$N_m$,s = 1,...,N après le post-traitement, $N_m$ étant une longueur de l'estimation de canal $\hat{h}^s$ de chaque voie;

dans lequel la réalisation du post-traitement pour l'estimation de canal $\hat{h}^s$ de chaque voie comprend: la comparaison de la puissance de chaque prise dans $\hat{h}^s$ avec un seuil; le choix de la prise qui est inférieure au seuil en tant que bruit, et l'établissement d'une valeur de la prise comme étant zéro; le choix de la prise qui est supérieure au seuil en tant que signal, et le maintien d'une valeur de la prise inchangée;

(c2) combinaison de l'estimation de canal $\hat{h}_p^s(i)$ dans l'ordre temporel dans une estimation de canal totale $\hat{h}^{total}(l)$, $\hat{h}^{total}(l)|_{l=((i-1)N+s)} = \hat{h}_p^s(i)$, i = 1,...,$N_m$,s = 1,...;

(c3) réalisation d'un tri descendant sur $|\hat{h}^{total}(l)|$, et l'obtention d'une séquence d'estimation de canal $\hat{h}^{total}$(kl),l=1,...,N $N_m$ après le tri, et réalisation ensuite des calculs suivants dans l'ordre à partir de $k_1$ à $k_{N\,NM}$: si $|\hat{h}^{total}(l)|$ est supérieure à zéro, puis une prise de réponse impulsionnelle de ce canal dans la séquence d'estimation de canal $\hat{h}^{total}(l)$ avant le tri est retenue, et d'autres valeurs de cette prise dans une puce juste sur la gauche et une puce juste sur la droite dans $\hat{h}^{total}(l)$sont établies comme zéro;

(c4) réduction de la séquence d'estimation de canal totale $\hat{h}^{total}(l)$ qui est obtenue après le traitement de l'étape (c3) à l'estimation de canal $\hat{h}_{MF}^s$ de l'échantillonnage de N-voies,

de préférence, à l'étape (d), un symbole $\hat{d}$ de chacun desdits utilisateurs est estimé sur la base d'un signal échantillonné multi-voie $e_d^s$ d'une partie de données reçues, la matrice de système $A^s$ et la matrice de filtrage appariée $A_{MF}^s$, et une équation est la suivante

$$\widehat{d} = (\sum_{s=1}^{N} (A_{MF}^s)^H A^s)^{-1} \sum_{s=1}^{N} (A_{MF}^s)^H e_d^s$$

ou

$$\widehat{d} = (\sum_{s=1}^{N} (A_{MF}^s)^H A^s + \sigma_n^2 I)^{-1} \sum_{s=1}^{N} (A_{MF}^s)^H e_d^s,$$

Où $e_d^s$ est le signal échantillonné multi-voie, de la partie de données reçues, $e_d^s = A^s d + n_s^s$, $s = 1,...,N$, $\sigma_n^s$ est la puissance de bruit.

2. Procédé de traitement de bande de base destiné à améliorer le rapport signal sur bruit (SNR) sur la base d'un échantillonnage multiple selon la revendication 1, **caractérisé en ce que** dans l'étape (b), ladite estimation de canal $\hat{h}^s$ est obtenue en utilisant une équation: $\hat{h}^s = M^{-1} e_m^s$, dans laquelle $e_m^s$ est un signal de séquence d'apprentissage d'un s^ème échantillonnage, M est une matrice de séquence d'apprentissage lancée, $\hat{h}^s$ est une réponse d'impulsion de canal de tous les utilisateurs dans une cellule locale du s^ème échantillonnage de voie.

3. Procédé de traitement de bande de base destiné à améliorer le rapport signal sur bruit (SNR) sur la base d'un échantillonnage multiple selon la revendication 1, dans lequel à l'étape (c1), l'estimation de canal $\hat{h}_p^s(i)$ après ledit post-traitement est obtenue de la manière suivante: comparaison de la puissance de chaque prise dans $\hat{h}^s$ avec un seuil; la prise qui est inférieure au seuil est considérée comme un bruit, et sa valeur est établie à zéro; la prise qui est supérieure au seuil est considérée comme un signal, et sa valeur est retenue.

# EP 1 940 041 B1

fig. 1

fig. 2

**EP 1 940 041 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 4329317 A1
- EP 0767543 A2
- CN 1317914